(19) Europäisches Patentamt

European Patent Office

Office européen des brevets

(11) **EP 1 394 233 B1**

(12) **EUROPÄISCHE PATENTSCHRIFT**

(45) Veröffentlichungstag und Bekanntmachung des Hinweises auf die Patenterteilung:
**26.04.2006 Patentblatt 2006/17**

(51) Int Cl.:
***C09K 3/22*** *(2006.01)*     ***C04B 24/16*** *(2006.01)*
*C04B 103/30* *(2006.01)*

(21) Anmeldenummer: **03018630.8**

(22) Anmeldetag: **20.08.2003**

(54) **Staubreduzierte Luftporenbildner**

Dust reduced air entraining agent

Entraîneur d'air avec poussiérage reduit

(84) Benannte Vertragsstaaten:
**AT BE BG CH CY CZ DE DK EE ES FI FR GB GR HU IE IT LI LU MC NL PT RO SE SI SK TR**

(30) Priorität: **29.08.2002 DE 10239703**

(43) Veröffentlichungstag der Anmeldung:
**03.03.2004 Patentblatt 2004/10**

(73) Patentinhaber: **Cognis Deutschland GmbH & Co. KG**
**40789 Monheim (DE)**

(72) Erfinder:
• **Gress, Wolfgang**
  **42111 Wuppertal (DE)**
• **Wollmann, Gerhard, Dr.**
  **40723 Hilden (DE)**
• **Neumann, Ralf**
  **42781 Haan (DE)**
• **van der Koelen, Thomas**
  **45476 Mülheim (DE)**
• **Schulte, Heinz-Günther, Dr.**
  **45481 Mülheim (DE)**

(56) Entgegenhaltungen:
**EP-A- 0 352 583        EP-B- 0 752 977**

• **PATENT ABSTRACTS OF JAPAN vol. 012, no. 230 (C-508), 29. Juni 1988 (1988-06-29) & JP 63 022889 A (NISSAN CHEM IND LTD), 30. Januar 1988 (1988-01-30)**
• **"CHEMICAL ABSTRACTS + INDEXES, AMERICAN CHEMICAL SOCIETY. COLUMBUS, US" , CHEMICAL ABSTRACTS + INDEXES, AMERICAN CHEMICAL SOCIETY. COLUMBUS, US XP000192498 ISSN: 0009-2258 * Zusammenfassung ***

EP 1 394 233 B1

**Beschreibung**

**Gebiet der Erfindung**

Die Erfindung liegt auf dem Gebiet von Mörtel-, Gips- und Putzsystemen, zementösen Massen, Beton und dergleichen und betrifft staubreduzierte Luftporenbildner für Mörtel-, Gips- und Putzsysteme, zementöse Massen, Beton und dergleichen.

**Stand der Technik**

Bei der Verarbeitung von Mörtel-, Gips- und Putzsystemen, zementösen Massen und Beton kommen die unterschiedlichsten Additive zum Einsatz. Ein besonders wichtiges Additiv sind Luftporenbildner. Diese dienen dazu, dass im verarbeiteten System Luftporen ausgebildet werden, um einerseits das System besser verarbeiten zu können und um andererseits dem fertigen Werkstoff bestimmte Eigenschaften zu verleihen. Die einschlägigen Zusammenhänge sind dem Fachmann bekannt.

Als Luftporenbildner werden in der Praxis besonders gern Tenside eingesetzt. Dies können anionische, nichtionische oder kationische Tenside sein. Beispiele für häufig zum Einsatz kommende Tenside sind etwa Alkalisalze von Harzsäuren, sulfonierte Harzsäuren, Alkylsulfonate, Alkylarylsulfonate, Olefinsulfonate und Salze von Fettsäuren. Aus DE-C-40 35 236 ist $2KHSO_5$ x $KHSO_4$ x $K_2SO_4$ als Luftporenbildner bekannt, das sogenannte "Tripelsalz". Aus EP-B-752 977 sind Luftporenbildner bekannt, die aus dem Salz eines Kolophoniumharzes mit einem Aminoalkohol und Alkohol bestehen.

Aus **EP-A-352 583** sind Alkalisalze polymerer Carbonsäuren als Staubbindemittel für Beton im Trockenspritzverfahren bekannt. Dabei geht es darum, den in einer Betonmischung, überwiegend bestehend aus Zement und verschiedenen Sanden, vorhandenen anorganischen Feinstoffanteil möglichst wirksam zu binden. Dieser Feinstoffanteil ist selbstverständlich auf die Gesamtheit der in der Betonmischung vorhandenen Komponenten zurückzuführen.

Luftporenbildner sind in verschiedenen Angebotsformen im Handel erhältlich, hauptsächlich als Feststoff, als Flüssigkeit, wässrige Lösung oder als wässrige Dispersion.

Beispiele für häufig eingesetzte feste Luftporenbildner - worunter verstanden wird, dass es sich um Substanzen handelt, die bei -20 °C fest sind - sind etwa Na-Alkyl-Sulfate, wie z.B. Na-Lauryl-Sulfat, im Handel z. B. erhältlich von der Fa. Cognis unter dem Markennamen Texapon® K 12 P und Na-C12-18-Alkyl-Sulfate.

**Beschreibung der Erfindung**

Bei 20 °C feste, pulverförmige Luftporenbildner sind für den Fachmann besonders attraktiv, da sie sich einerseits gut lange Zeit zersetzungsfrei lagern lassen und da sie im Vergleich zu wässrigen Angebotsformen wegen des geringeren Volumens deutliche Vorteile beim Transport aufweisen. Ein Nachteil dieser Art von Luftporenbildnem besteht darin, dass die darin enthaltenen Staubanteile die Handhabbarkeit erschweren. So sind beispielsweise die auf Grund ihrer anwendungstechnisch guten Eigenschaften sehr begehrten pulverförmigen Na-Alkylsulfate herstellungsbedingt sehr staubig, so dass sie - etwa beim Einsatz auf der Baustelle im Zuge ihrer Einarbeitung in Mörtel-, Gips- und Putzsysteme, zementöse Massen oder Beton - durch die geringste Luftströmung mitgetragen und im Arbeitsumfeld verteilt werden. Dies sollte jedoch aus Gründen des Arbeits- und Gesundheitsschutzes möglichst vermieden werden.

**Aufgabe** der vorliegenden Erfindung war es daher, bei 20 °C feste, pulverförmige Luftporenbildner für Mörtel-, Gips- und Putzsysteme, zementöse Massen, Beton und dergleichen, insbesondere solche aus der Klasse der Na-Alkylsulfate, in einer Angebotsform zur Verfügung zu stellen, die sich durch eine reduzierte Staubigkeit auszeichnen. Diese Angebotsform sollte bei Verarbeitung, Lagerung und Transport keine stabilen Klumpen bilden und frei fliessend sein. Die Angebotsform sollte sich ferner in trockene Mörtel-, Gips- und Putzsysteme, zementöse Massen, Beton und dergleichen gut einarbeiten und verteilen lassen. Des weiteren sollte die Angebotsform nicht zu einer Verschlechterung der anwendungstechnischen Eigenschaften von damit ausgerüsteten Mörtel-, Gips- und Putzsystemen, zementösen Massen, Beton und dergleichen führen.

Gegenstand der Erfindung sind **staubreduzierte Luftporenbildner** für Mörtel-, Gips- und Putzsysteme, zementöse Massen, Beton und dergleichen, wobei diese Luftporenbildner in Form von Agglomeraten vorliegen, die erhältlich sind, indem man einen bei 20 °C festen, pulverförmigen Luftporenbildner mit einer wässrigen Lösung oder Dispersion mindestens eines Homo- und/oder Copolymers auf Basis von Acrylsäure und/oder Methacrylsäure in Form seines Alkalimetall- oder Ammoniumsalzes besprüht und das derart befeuchtete Pulver innig durchmischt.

Die erfindungsgemäßen staubreduzierten Luftporenbildner zeichnen sich durch eine im Vergleich zu den zu ihrer Herstellung eingesetzten bei 20 °C festen, pulverförmigen Luftporenbildnem deutlich reduzierte Staubigkeit aus. Unter reduzierter Staubigkeit wird dabei verstanden, dass die Staubigkeit der erfindungsgemäßen staubreduzierten Luftporenbildner im Vergleich zu den zu ihrer Herstellung eingesetzten bei 20 °C festen, pulverförmigen Luftporenbildnern um mindestens 30% reduziert ist.

## Messung der Staubigkeit

Die Staubigkeit wird als **Staubwert** erfindungsgemäß wie folgt gemessen: Eine Menge von 50 g der zu prüfenden Substanz wird innerhalb von 0,5 Minuten gleichmäßig und kontinuierlich aus einem Becherglas in einen Pulvertrichter geschüttet. Dabei handelt es sich um einen handelsüblichen Pulvertrichter aus Kunststoff mit folgenden Maßen: Oberer Durchmesser des konischen Teils = 80 mm; Länge des Auslaufteils = 25 mm; Durchmesser des Auslaufteils = 20 mm. Die Prüfsubstanz fällt aus der Auslauföffnung des Trichters in ein zylindrisches Gefäß mit einer Höhe von 370 mm und einem Durchmesser von 350 mm. Der Trichter ist mittels eines Stativs so befestigt, dass er mittig über dem Gefäß angebracht ist und der Fallweg der Prüfsubstanz (= Abstand vom Boden des Gefäßes bis zur Auslauföffnung des Trichters) 350 mm beträgt. Am Boden des Gefäßes steht mittig ein zylindrisches Auffanggefäß mit einer Höhe von 80 mm und einem des Öffnungsdurchmessers von 115 mm. Die Hauptmenge $m_{Nicht-Staub}$ an zu vermessender Prüfsubstanz fällt nun in das Auffanggefäß. Nur der Staubanteil $m_{Staub}$ fällt neben das Auffanggefäß. Nach 2 Minuten Absetzzeit werden die entsprechenden Gewichtsmengen durch Wägung bestimmt.

Der Staubwert der Probe ergibt sich als Verhältnis von Menge Substanz neben dem Auffanggefäß (= Staub) zu Gesamtmenge Substanz im Auffanggefäß (=Nicht-Staub) und neben dem Auffanggefäß (= Staub):

$$\text{Staubwert (\%)} = m_{Staub}/(m_{Nicht-Staub} + m_{Staub}) \times 100$$

## Vorteile der Erfindung

Die erfindungsgemäßen Agglomerate der staubreduzierten Luftporenbildner sind trocken, nicht klebrig, freifliessend und - gemäß der obigen Definition der Staubwertes - staubarm bzw. staubfrei. Sie bilden keine stabilen Klumpen. Bei der Herstellung in Mischern mit Sprühvorrichtung (siehe unten) bilden sich auch keine Anbackungen in den Mischern.

Beim Einsatz der erfindungsgemäßen Luftporenbildner mit reduzierten Staubwerten in Mörtel-, Gips- und Putzsystemen, zementösen Massen, Beton und dergleichen wurden im Vergleich zum Einsatz der entsprechenden nicht-staubreduzierten Luftporenbildner folgende Vorteile gefunden:

- Schnelle Luftporenbildung durch bessere Dispergierung des Luftporenbildners während des Vermischens mit Zement und Sand
- Gleichmäßigere Porenverteilung der Luftporen im Trockenputz
- Feinporigere Luftporen in den ausgehärteten Systemen mit vernetzter Schaumstruktur, mit der Wirkung einer geringeren Wärmeleitfähigkeit
- Höhere Festigkeit des trockenen Mörtels

## Luftporenbildner

Die Art der zur Herstellung der erfindungsgemäßen staubreduzierten Luftporenbildner einsetzbaren bei 20 °C festen, pulverförmigen Luftporenbildner ist an sich keinerlei Beschränkungen unterworfen. Insbesondere setzt man als Luftporenbildner 20 °C feste, pulverförmige Tenside ein, wobei anionische Tenside besonders bevorzugt sind. Beispiele für prinzipiell geeignete Luftporenbildner sind Na-Alkyl-Sulfate, Na-Alkyl-Benzol-Sulfonate und Naphthalin-Sulfonate, sofern sie die oben genannte Bedingung erfüllen, daß sie bei 20 °C fest und pulverförmig vorliegen.

Bei 20 °C feste, pulverförmige Na Alkyl-Sulfate, insbesondere Na-Laurylsulfat, sind im Rahmen der vorliegenden Erfindung als Luftporenbildner ganz besonders bevorzugt.

Homo- und/oder Copolymere auf Basis von Acrylsäure und/oder Methacrylsäure Wie bereits gesagt sind die erfindungsgemäßen staubreduzierte Luftporenbildner erhältlich, indem man einen bei 20 °C festen, pulverförmigen Luftporenbildner mit einer wässrigen Lösung oder Dispersion mindestens eines Homo- und/oder Copolymers auf Basis von Acrylsäure und/oder Methacrylsäure in Form seines Alkalimetall- oder Ammoniumsalzes besprüht und das derart befeuchtete Pulver innig durchmischt.

Die zum Einsatz kommenden Homo- und/oder Copolymeren auf Basis von Acrylsäure und/oder Methacrylsäure haben vorzugsweise eine mittlere Molmasse im Bereich von 5.000 bis 150.000.

Die Homo- und/oder Copolymeren auf Basis von Acrylsäure und/oder Methacrylsäure kommen werden in Form ihrer Alkalimetall- oder Ammoniumsalze eingesetzt. Dabei können die Carboxylgruppen der Homo- und/oder Copolymeren vollständig oder lediglich partiell neutralisiert sein. Es ist jedoch bevorzugt, solche Homo- und/oder_Copolymeren einzusetzen, deren Carboxylgruppen vollständig neutralisiert sind. Die Homo- und/oder Copolymeren können einzeln oder im Gemisch untereinander eingesetzt werden.

Beispiele besonders geeigneter erfindungsgemäß einzusetzender Homo- und/oder Copolymeren sind

- Natrium-Polyacrylat und
- Maleinsäureanhydrid-Acrylsäure-Copolyrner-Natrium-Salz.

Beispiele für handelsübliche Produkte dieser Substanzklassen sind:

Natrium-Polyacrylate:

➢ Hydropalat® 1706 der Fa. Cognis
➢ Hydropalat® 44 und Hydropalat® 5040 der Fa. Cognis
➢ Hydropalat® N der Fa. Cognis
➢ Clercal® PA 660 der Fa. Cognis
➢ Clereal® 800 der Fa. Cognis
➢ Sokalan® PA 50 der Fa. BASF
➢ Sokalan® PA 80 S (CAS 9003-04-7) der Fa. BASF

Maleinsäureanhydrid-Acrylsäuge-Copolymer-Natrium-Salze:

➢ Sokalan® CP45 der Fa. BASF
➢ Sokalan® CP5 der Fa. BASF

Das Aufsprühen der Homo- und/oder Copolymeren

Die zum Einsatz kommenden Homo- und/oder Copolymeren auf Basis von Acrylsäure und/oder Methacrylsäure werden vorzugsweise in einer Menge von 0,1 bis 6 Gew.-% Aktivsubstanz - bezogen auf die Gesamtmenge der eingesetzten bei 20 °C festen, pulverförmigen Luftporenbildner - auf die bei 20 °C festen, pulverförmigen Luftporenbildner aufgesprüht. Ganz besonders bevorzugt ist es dabei, die Homo- und/oder Copolymeren in einer Menge von 0,1 bis 3 Gew.-% auf die bei 20 °C festen, pulverförmigen Luftporenbildner aufzusprühen. Die Mengenangaben bezüglich der Homo- und/oder Copolymeren auf Basis von Acrylsäure und/oder Methacrylsäure beziehen sich stets auf die Menge an Aktivsubstanz, d.h. auf die Menge der Homo- und/oder Copolymeren in Form ihrer Alkali- bzw. Ammoniumsalze als solche. Dies ist insbesondere im Hinblick darauf zu beachten, dass die Homo- und/oder Copolymeren wie bereits gesagt auf die bei 20°C festen, pulverförmigen Luftporenbildner aufgesprüht werden. Sie werden dabei insbesondere in Form ihrer wässrigen Lösungen oder Dispersionen aufgesprüht, vorzugsweise in Form von 20 bis 40 Gew.-%-igen wässrigen Lösungen bzw. Dispersionen.

Das Aufbringen von wässrigen Lösungen bzw. Dispersionen der Homo- und/oder Copolymeren auf die festen, pulverförmigen Luftporenbildner durch Aufsprühen hat den Vorteil, dass das Wasser in den Lösungen bzw. Dispersionen die Oberfläche des Pulvers befeuchtet und anlöst, so dass die Homo- und/oder Copolymeren an der Oberfläche des Pulvers gut anhaften können und eine Agglomeratbildung zwischen benachbarten Partikeln möglich ist.

Die Art des Aufsprühens der wässrigen Lösungen bzw. Dispersionen der Homo- und/oder Copolymeren auf die festen, pulverförmigen Luftporenbildner ist an sich nicht kritisch. Hier können im Prinzip alle dem Fachmann einschlägig bekannten Techniken herangezogen werden. In einer bevorzugten Variante werden hierbei Mischer eingesetzt, die so ausgerüstet sind, dass sie eine Spaihvorrichtung aufweisen.

Derartige Mischer sind etwa: Mischer mit aufwirbelnden Mischorganen und Sprühvorrichtung: Horizontale Pflugscharmischer z.B. der Fa. Lödige und der Fa. Gericke; vertikale Schleudermischer z.B. der Fa. Papenmeier. Die genannten Lödige-Mischer sind im Rahmen der Erfindung besonders geeignet.

Mischer mit abwälzenden Mischorganen und Sprühvorrichtung: Kegelmischer z.B. Nauta-Intensifier der Fa. Hosokawa Micron; Schneckenbandmischer z.B. der Fa. Ruberg.

Bedingt geeignet sind luftdurchströmte Mischer wie z.B Wirbelschichten der Fa. Glatt oder Hosokawa Micron BV.

Das Aufsprühen der Homo- und/oder Copolymeren-Lösungen oder -Dispersionen auf die festen, pulverförmigen Luftporenbildner und das Durchmischen des befeuchteten Pulvers werden vorzugsweise gleichzeitig durchgeführt. Dies ist durch den Einsatz der genannten Mischer mit Sprühvorrichtung gewährleistet.

In einer Ausführungsform werden die zum Einsatz kommenden Homo- und/oder Copolymeren auf Basis von Acrylsäure und/oder Methacrylsäure in Kombination mit Kieselsäure und/oder Cellulose auf die bei 20 °C festen, pulverförmigen Luftporenbildner aufgesprüht.

Beim Einsatz der mit Cellulose zusätzlich ausgerüsteten erfindungsgemäßen Luftporenbildner mit reduzierten Staubwerten in Mörtel-, Gips- und Putzsystemen, zementösen Massen, Beton und dergleichen wurden im Vergleich zum Einsatz der entsprechenden nicht-Cellulose-haltigen staubreduzierten Luftporenbildner folgende Vorteile gefunden: bessere Vernetzung und höhere Scherstabilität von trockenem Mörtel.

Weitere Erfindungsgegenstände

Ein weiterer Gegenstand der Erfindung ist ein Verfahren zur Herstellung von staubreduzierten Luftporenbildnern für Mörtel-, Gips- und Putzsysteme, zementöse Massen, Beton und dergleichen, wobei man einen bei 20 °C festen, pulverförmigen Luftporenbildner mit einer wässrigen Lösung oder Dispersion mindestens eines Homo- und/oder Copolymers auf Basis von Acrylsäure und/oder Methacrylsäure in Form seines Alkalimetall- oder Ammoniumsalzes besprüht und das derart befeuchtete Pulver innig durchmischt.

Nach dem erfindungsgemäßen Verfahren sind u.a. staubreduzierte Tensidpulver in Form von Agglomeraten zugänglich. Diese können im Prinzip überall dort eingesetzt werden, wo es im Zuge der Verarbeitung von Tensidpulvern darauf ankommt, dass diese Pulver in einer staubreduzierten Form vorliegen. Beispielsweise kann dies beim Einsatz von Tensidpulvern der Fall sein, die im Zuge der Emulsionspolymerisation als Emulgatoren bzw. Dispergatoren eingesetzt werden.

Im Sinne der vorliegenden Erfindung ist jedoch die Verwendung von staubreduzierten Tensidpulvern als Luftporenbildnem für Mörtel-, Gips- und Putzsysteme, zementöse Massen, Beton und dergleichen, besonders bevorzugt.

Ein weiterer Gegenstand der Erfindung ist dementsprechend die Verwendung von staubreduzierten Tensidpulvern, die erhältlich sind, indem man ein bei 20 °C festes, pulverförmiges Tensid mit einer wässrigen Lösung oder Dispersion mindestens eines Homo- und/oder Copolymers auf Basis von Acrylsäure und/oder Methacrylsäure in Form seines Alkalimetall- oder Ammoniumsalzes besprüht und das derart befeuchtete Pulver innig durchmischt, als staubreduzierte Luftporenbildner für Mörtel-, Gips- und Putzsysteme, zementöse Massen, Beton und dergleichen.

Ein weiterer Gegenstand der Erfindung ist die Verwendung von Alkalimetall- oder Ammoniumsalzen von Homo- und/oder Copolymeren auf Basis von Acrylsäure und oder Methacrylsäure als staubbindenden Zusatz für Luftporenbildner für Mörtel-, Gips- und Putzsysteme, zementöse Massen, Beton und dergleichen.

**Beispiele**

**1. Eingesetzte Substanzen**

1.1. Unbehandelter, nicht-erfindungsgemäßer Luftporenbildner:

**Texapon K12 =** pulverförmiges Natriumlaurylsulfat (Texapon K12® ;Fa. Cognis)

1.2. Binder:

**Hydropalat 1706** = 30 %-ige wässrige Lösung von Natriumpolyacrylat (Hydropalat 1706®; Fa. Cognis)
**Hydropalat N** = 40 %-ige wässrige Lösung von Natriumpolyacrylat (Hydropalat N®; Fa. Cognis)
**Hydropalat NS** = 40 %-ige wässrige Lösung von Natriumpolyacrylat (Hydropalat NS®; Fa. Cognis)
**Sokalan CP 45** = 45 %-ige wässrige Lösung von Maleinsäureanhydrid-AcrylsäureCopolymer-Na-Salz (Sokalan CP 45®; Fa. BASF)
**Sokalan PA 50=40** %-ige-wässrige-Lösung von Natriumpolyacrylat (Sokalan CP 50®; Fa. BASF)
**Sokalan PA 80 S** = 35 %-ige wässrige Lösung von Natriumpolyacrylat (Sokalan PA 80 S®; Fa. BASF)
**Clercal CPA 660** = 40 %-ige wässrige Lösung von Natriumpolyacrylat (Clercal CPA 660®; Fa. Cognis)
**Clercal 800** = 45 %-ige wässrige Lösung von Natriumpolyacrylat (Clercal 800®; Fa. Cognis)

1.3. Fliessverbesserer:

**Arbocel BE 600/20** = Cellulose (Arbocel BE 600/20®; Fa. Rettenmaier & Söhne)
**Sipernat 22** = pyrogene Kieselsäure (Sipernat 22®; Fa. Degussa)

## 2. Meßmethoden

### 2.1. Staubwerte

Die Bestimmung der Staubwerte erfolgte wie oben in der Beschreibung im Kapitel "Messung der Staubigkeit" angegeben.

### 2.2. Drucktest

Bei Lagerung und Transport in Säcken und Big-Bags unterliegen die Agglomerate Druckbelastungen. Um unter Druckbelastung die Neigung des Ausquetschens des Binders und die Neigung zum Verklumpen zu testen, wurden die Agglomerate im Probeglas (80 mm Durchmesser) mit einem Gewicht (4,6 kg) mehrere Stunden lang belastet. Dies entspricht einer Druckbelastung von 915 kg/m$^2$.

Generell war beim Einsatz der erfindungsgemäßen Agglomerate gemäß den Beispielen festzustellen, dass sich Kompaktate durch die Druckbelastung Kompaktate gebildet hatten; diese zerfielen jedoch wieder, wenn das Glas mit den Kompaktaten kurz auf den Tisch gestoßen wurde und dabei eine geringe Menge an mechanischer Energie zugeführt wurde. Die Agglomerate flossen klumpenfrei und nahezu staubfrei aus dem Probeglas wieder heraus.

### 2.3. Anwendungstechnische Untersuchungen

Mit Texapon K12 sowie mit den erfindungsgemäßen staubreduzierten Luftporenbildnem (Agglomeraten) gemäß den Beispielen wurden auch anwendungstechnische Tests in Mörtelmischungen durchgeführt. Die Einzelheiten waren wie folgt:

Herstellen eines Trocken-Mörtel Putzes (Vormischung)

Putzmörtel nach DIN 18550, Mörtelklasse P III b:

250 g Portlandzement DIN CEM I 52,5 R
750 g Flaesheimer Mörtelsand (getrocknet)
0, 1 g Texapon K 12 (gemäß dem Vergleichsbeispiel) bzw.
Texapon K12-Agglomerat (gemäß den erfindungsgemäßen Beispielen)

Herstellung einer feuchten Mischung

1000,1 g der vorstehend genannten Vormischung
167 g Wasser

im Mörtelmischer nach DIN EN 196 (Hobartmischer) und Mischzeit 3min/Stufe 1

**Messung des Luftporengehaltes** in einem Druckausgleichsverfahren im Luftgehaltsprüfer nach DIN 18555. Es wurden 750 cm$^3$ feuchter Mörtel vorgelegt und der verbleibende hohlraum des Gefäßes mit Wasser gefüllt. Anschließend wurde der Druck im Gefäß erhöht (= Aufgabe eines definierten Prüfdruckes). Dadurch wird bewirkt, dass das Wasser in die Luftporen des Mörtels gedrückt wird. Nach Entspannen war die Druckabnahme ein Mass für den Luftporegehalt.

**Messung des Erstarrungsverhaltens** im Nadelgerät nach Vicat, DIN EN 196 Teil 3 (Zementerstarrung). Zur Messung des Erstarrungsverhaltens wird der Erstarrungsbeginn und das Erstarrungsende gemessen.

**Messung des Erstarrungsbeginns:** Eine Nadel wird immer wieder in den feuchten Mörtel bis zum Boden hineinfallen gelassen. Sobald die Erstarrung beginnt, nimmt die Fallhöhe ab. Der Zeitpunkt wird als Erstarrungsbeginn definiert, wenn die Falltiefe der Nadel um 5 mm geringer ist als die Probenhöhe

**Messung des Erstarrungsendes:** Eine Nadel mit ringförmigem Ansatz wird auf die erstarrende Oberfläche aufgesetzt. Der Zeitpunkt wird als Erstarrungsende bezeichnet sobald sobald nur noch die Nadelspitze eindringt und der ringförmige Ansatz keinen Eindruck mehr hinterlässt.

Vergleichs-Beispiel

Texapon K12 war lagerungsbedingt im Sack schon leicht klumpig. Beim geöffneten Sack nahm durch Hydrophobie die Klumpigkeit mit der Zeit zu. Texapon K12 liess sich nur mit hoher Staubbildung umschütten. Es hatte eine Schüttdichte von 285 kg/m$^3$. Der Staubwert betrug 7,7%.

Beim Drucktest bildete sich unter dem Stempel ein Kompaktat, das unter leichtem Zerreiben mit viel Staub wieder zerfiel. Nach dem Luftporentest hatte der feuchte Mörtel eine Dichte von 1640 kg/m3. Der Luftporengehalt betrug nach der ersten Entlastung im Mittel 21 %. Der Luftporengehalt lag nach 10 Minuten bei 19,5 % und nach 15 Minuten bei 19,0 %. Die Dichte stieg auf 1670 kg/m$^3$ an. Der Erstarrungsbeginn des Mörtels erfolgte nach 5 h : 10 min. Das Erstarrungsende-wurde nach 5 h: 30 min gemessen.

**Beispiel 1**

In einem 51 Lödige Mischer wurden 500 g Texapon K12 vorgelegt und innerhalb von 2 Minuten 15 g Hydropalat 1706 zudosiert. Anschließend wurde noch 2 Minuten nachgemischt. Die Proben waren staubarm . Der Staubwert betrug 1,9 % . Die Schüttdichte betrug 284 kg/m$^3$.

Nach dem Drucktest ließ sich das Kompaktat mit der Hand leicht und staubarm zerstören.

Nach dem Luftporentest hatte der feuchte Mörtel eine Dichte von 1647 kg/m$^3$. Der Luftporengehalt betrug nach der ersten Entlastung im Mittel 21 %. Der Luftporengehalt lag nach 10 Minuten bei 19,5 % und nach 15 Minuten bei 19,0 %. Die Dichte stieg auf 1690 kg/m$^3$ an.

Der Erstarrungsbeginn des Mörtels erfolgte nach 5 h : 05 min. Das Erstarrungsende wurde nach 5 h : 20 min gemessen. Erstarrungsbeginn und -ende entsprechen im Rahmen der Messgenauigkeit den entsprechenden Werten des Vergleichsbeispiels (siehe oben).

**Beispiel 2**

Entsprechend Beispiel 1 wurden 500 g Texapon K12 vorgelegt und innerhalb von 2 Minuten 15 g Hydropalat N zudosiert. Anschließend wurde noch 2 Minuten nachgemischt. Die Proben waren staubarm. Der Staubwert betrug 2,0 % . Die Schüttdichte betrug 284 kg/m$^3$.

Nach dem Drucktest liess sich das Kompaktat mit der Hand leicht und staubarm zerstören.

Nach dem Luftporentest hatte der feuchte Mörtel eine Dichte von 1641 kg/m3.

Der Luftporengehalt betrug nach der ersten Entlastung im Mittel 20,5 %.

Der Erstarrungsbeginn des Mörtels erfolgte nach 5 h : 00 min. Das Erstarrungsende wurde zu 5 h : 10 min gemessen.

**Beispiel 3**

Entsprechend Beispiel 1 wurden 500 g Texapon K12 vorgelegt und innerhalb von 2,5 Minuten 5 % Hydropalat N zudosiert. Anschließend wurde noch 2 Minuten nachgemischt. Die Proben waren staubfrei. Der Staubwert betrug 1,8 %. Die Schüttdichte betrug 292 kg/m$^3$.

Nach dem Drucktest ließ sich das Kompaktat, mit der Hand leicht und staubarm zerstören.

**Beispiel 4**

Entsprechend Beispiel 1 wurden 500 g Texapon K12 vorgelegt und innerhalb von 2 Minuten 12,5 g Hydropalat NS zudosiert. Anschließend wurde noch 2 Minuten nachgemischt. Die Proben waren staubarm . Der Staubwert betrug 2,0 %. Die Schüttdichte betrug 265 kg/m$^3$.

**Beispiel 5**

Entsprechend Beispiel 1 wurden 500 g Texapon K12 vorgelegt und innerhalb von 2 Minuten 15 g Sokalan CP 45 zudosiert. Anschließend wurde noch 2 Minuten nachgemischt. Die Proben waren staubarm . Der Staubwert betrug 2,0 % . Die Schüttdichte betrug 280 kg/m$^3$.

**Beispiel 6**

Entsprechend Beispiel 1 wurden 500 g Texapon K12 vorgelegt und innerhalb von 2 Minuten 15 g Sokalan PA 50 zudosiert. Anschließend wurde noch 2 Minuten nachgemischt. Die Proben waren staubarm . Der Staubwert betrug 2,1 %. Die Schüttdichte betrug 339 kg/m$^3$.

**Beispiel 7**

Entsprechend Beispiel 1 wurden 500 g Texapon K12 vorgelegt und innerhalb von 2 Minuten 15 g Sokalan PA 80 S zudosiert. Anschließend wurde noch 2 Minuten nachgemischt. Die Proben waren staubarm . Der Staubwert betrug 2,2 %. Die Schüttdichte betrug 332 kg/m$^3$.

**Beispiel 8**

Entsprechend Beispiel 1 wurden 500 g Texapon K12 vorgelegt und innerhalb von 2 Minuten 15 g Clercal CPA 660 zudosiert. Anschließend wurde noch 2 Minuten nachgemischt. Die Proben waren staubarm . Der Staubwert betrug 3,6 %. Die Schüttdichte betrug 272 kg/m$^3$.

**Beispiel 9**

Entsprechend Beispiel 1 wurden 500 g Texapon K12 vorgelegt und innerhalb von 2 Minuten 15 g Clercal 800 zudosiert. Anschließend wurde noch 2 Minuten nachgemischt. Die Proben waren staubarm. Der Staubwert betrug 3,6 %. Die Schüttdichte betrug 275 kg/m$^3$.

**Beispiel 10**

Entsprechend Beispiel 10 wurden 400 g Texapon K12 vorgelegt und innerhalb von 1 Minute 10g Hydropalat 1706 zudosiert. Danach wurden noch 4 g Cellulose Arbocel BE 600/20 als Fliessverbesserer zugegeben. Anschließend wurde noch 2 Minuten nachgemischt. Die Proben waren sensorisch gesehen gröber und staubarm. Das Fliessverhalten war verbessert. Der Staubwert betrug 1,6 %. Die Schüttdichte sank auf 270 kg/m$^3$.

**Beispiel 11**

Entsprechend Beispiel 10 wurden 400 g Texapon K12 vorgelegt und innerhalb von 1 Minute 10 g Sokalan CP 45 zudosiert. Danach wurden noch 4 g Sipemat 22 als Fliessverbesserer zugegeben. Anschließend wurde noch 2 Minuten nachgemischt. Der Staubwert betrug 2,2 %. Die Schüttdichte betrug 268 kg/m$^3$.

**Beispiel 12**

Entsprechend Beispiel 10 wurden 400 g Texapon K12 vorgelegt und innerhalb von 1 Minute 10 g Hydropalat N zudosiert. Danach wurden noch 4 g Sipemat 22 als Fliessverbesserer zugegeben. Anschließend wurde noch 2 Minuten nachgemischt. Der Staubwert betrug 3,4 %. Die Schüttdichte betrug 267 kg/m$^3$.

**Beispiel 13**

Entsprechend Beispiel 10 wurden 400 g Texapon K12 vorgelegt und innerhalb von 1 Minute 10 g Clercal 800 zudosiert. Danach wurden noch 4 g Sipemat 22 als Fliessverbesserer zugegeben. Anschließend wurde noch 2 Minuten nachgemischt. Der Staubwert betrug 3,8 %. Die Schüttdichte betrug 267 kg/m$^3$.

**Patentansprüche**

1. Staubreduzierte Luftporenbildner für Mörtel-, Gips- und Putzsysteme, zementöse Massen, Beton und dergleichen, **dadurch gekennzeichnet, dass** diese Luftporenbildner in Form von Agglomeraten vorliegen, die erhältlich sind, indem man einen bei 20 °C festen, pulverförmigen Luftporenbildner mit einer wässrigen Lösung oder Dispersion mindestens eines Homo- und/oder Copolymers auf Basis von Acrylsäure und/oder Methacrylsäure in Form seines Alkalimetall- oder Ammoniumsalzes besprüht und das derart befeuchtete Pulver innig durchmischt.

2. Staubreduzierte Luftporenbildner nach Anspruch 1, wobei die bei 20 °C festen, pulverförmigen Luftporenbildner ausgewählt werden aus der Gruppe der Na-Alkyl-Sulfate, Na-Alkyl-Benzol-Sulfonate und Naphthalin-Sulfonate.

3. Staubreduzierte Luftporenbildner nach Anspruch 1, wobei man als bei 20 °C festen, pulverförmigen Luftporenbildner Na-Laurylsulfat einsetzt.

**4.** Staubreduzierte Luftporenbildner nach einem der Ansprüche 1 bis 3, wobei man die Homo- und/oder Copolymeren auf Basis von Acrylsäure und/oder Methacrylsäure auswählt aus der Gruppe Natrium-Polyacrylat und Maleinsäureanhydrid-Acrylsäure-Copolymer-Natrium-Salz.

**5.** Verfahren zur Herstellung von staubreduzierten Luftporenbildnem für Mörtel-, Gips- und Putzsysteme, zementöse Massen, Beton und dergleichen, **dadurch gekennzeichnet, dass** man einen bei 20 °C festen, pulverförmigen Luftporenbildner mit einer wässrigen Lösung oder Dispersion mindestens eines Homo- und/oder Copolymers auf Basis von Acrylsäure und/oder Methacrylsäure in Form seines Alkalimetall- oder Ammoniumsalzes besprüht und das derart befeuchtete Pulver innig durchmischt.

**6.** Verfahren nach Anspruch 5, wobei man Besprühen und Durchmischen gleichzeitig mittels Mischern mit aufwirbelnden Mischorganen und Sprühvorrichtung durchfilhrt.

**7.** Verwendung von staubreduzierten Tensidpulvem, die erhältlich sind, indem man ein bei 20 °C festes, pulverförmiges Tensid mit einer wässrigen Lösung oder Dispersion mindestens eines Homo- und/oder Copolymers auf Basis von Acrylsäure und/oder Methacrylsäure in Form seines Alkalimetall- oder Ammoniumsalzes besprüht und das derart befeuchtete Pulver innig durchmischt, als staubreduzierte Luftporenbildner für Mörtel-, Gips- und Putzsysteme, zementöse Massen, Beton und dergleichen.

**8.** Verwendung von Alkalimetall- oder Ammoniumsalzen-von Homo und/oder Copolymeren auf Basis von Acrylsäure und oder Methacrylsäure als staubbindenden Zusatz für Luftporenbildner Mörtel-, Gips- und Putzsysteme, zementöse Massen, Beton und dergleichen.

**Revendications**

**1.** Entraîneur d'air avec poussiérage réduit pour systèmes de mortier, de plâtre et d'enduit, masses de ciment, béton et similaires,
**caractérisé en ce qu'**
il se présente sous la forme d'agglomérats qui peuvent être obtenus en pulvérisant sur un entraîneur d'air pulvérulent solide à 20°C une solution ou dispersion aqueuse d'au moins un homopolymère et/ou copolymère à base d'acide acrylique et/ou d'acide méthacrylique sous la forme de son sel de métal alcalin ou de son sel d'ammonium et en mélangeant intimement la poudre ainsi humidifiée.

**2.** Entraîneur d'air avec poussiérage réduit selon la revendication 1,
dans lequel
l'entraîneur d'air pulvérulent solide à 20°C est choisi dans le groupe constitué par les alkylsulfates de sodium, les alkylbenzène sulfonates de sodium et le sulfonate de naphtalène.

**3.** Entraîneur d'air avec poussiérage réduit selon la revendication 1,
dans lequel
on utilise du laurylsulfate de sodium comme entraîneur d'air pulvérulent solide à 20°C.

**4.** Entraîneur d'air avec poussiérage réduit selon l'une des revendications 1 à 3,
dans lequel
on choisit les homopolymères et/ou copolymères à base d'acide acrylique et/ou d'acide méthacrylique dans le groupe constitué par le polyacrylate de sodium et le sel de sodium du copolymère d'acide acrylique et d'anhydride maléique.

**5.** Procédé d'obtention d'entraîneurs d'air avec poussiérage réduit pour systèmes de mortier, de plâtre et d'enduit, masses de ciments, béton et similaires,
**caractérisé en ce qu'**
on pulvérise sur un entraîneur d'air pulvérulent sous forme solide à 20°C une solution ou dispersion aqueuse d'au moins un homopolymère et/ou copolymère à base d'acide acrylique et/ou d'acide méthacrylique sous la forme de son sel de métal alcalin ou de son sel d'ammonium, et on mélange intimement la poudre ainsi humidifiée.

**6.** Procédé selon la revendication 5,
selon lequel

on effectue simultanément la pulvérisation et le mélange au moyen de malaxeurs équipés d'organes de mélange à mouvement tourbillonnaire et d'un dispositif de pulvérisation.

7. Utilisation de poudres tensioactives avec poussiérage réduit pouvant être obtenues en pulvérisant sur un tensioactif pulvérulent solide à 20°C une solution ou dispersion aqueuse d'au moins un homopolymère et/ou copolymère à base d'acide acrylique et/ou d'acide méthacrylique sous la forme de son sel de métal alcalin ou de son sel d'ammonium, et en mélangeant intimement la poudre ainsi humidifiée, comme entraîneur d'air avec poussiérage réduit pour systèmes de mortier, de plâtre et d'enduit, masses de ciments, béton et similaires.

8. Utilisation de sels de métal alcalin ou de sels d'ammonium d'homopolymères et/ou de copolymères à base d'acide acrylique et/ou d'acide méthacrylique comme additifs liant la poussière pour des entraîneurs d'air avec poussiérage réduit, dans des systèmes de mortier, de plâtre et d'enduit, des masses de ciments, du béton et similaires.

**Claims**

1. Dust-reduced air entraining agents for mortar, gypsum and plaster systems, cement-containing compositions, concrete and the like, **characterized in that** the air entraining agents are present in the form of agglomerates which can be obtained by spraying a powder-form air entraining agent solid at 20°C with an aqueous solution or dispersion of at least one homo- and/or copolymer based on acrylic acid and/or methacrylic acid in the form of its alkali metal or ammonium salt and thoroughly mixing the powder thus moistened.

2. Dust-reduced air entraining agents as claimed in claim 1, **characterized in that** the powder-form air entraining agents solid at 20°C are selected from the group consisting of Na alkyl sulfates, Na alkyl benzenesulfonates and naphthalene sulfonates.

3. Dust-reduced air entraining agents as claimed in claim 1, **characterized in that** Na lauryl sulfate is used as the powder-form air entraining agent solid at 20°C.

4. Dust-reduced air entraining agents as claimed in any of claims 1 to 3, **characterized in that** the homo- and/or copolymers based on acrylic acid and/or methacrylic acid are selected from the group consisting of sodium polyacrylate and maleic anhydride/acrylic acid copolymer sodium salt.

5. A process for the production of dust-reduced air entraining agents for mortar, gypsum and plaster systems, cement-containing compositions, concrete and the like, **characterized in that** a powder-form air entraining agent solid at 20°C is sprayed with an aqueous solution or dispersion of at least one homo- and/or copolymer based on acrylic acid and/or methacrylic acid in the form of its alkali metal or ammonium salt and the powder thus moistened is thoroughly mixed.

6. A process as claimed in claim 5, **characterized in that** the spraying and mixing steps are carried out simultaneously using mixers with turbulence-generating mixing elements and a spray unit.

7. The use of dust-reduced surfactant powders obtainable by spraying a powder-form air entraining agent solid at 20°C with an aqueous solution or dispersion of at least one homo- and/or copolymer based on acrylic acid and/or methacrylic acid in the form of its alkali metal or ammonium salt and thoroughly mixing the powder thus moistened, as dust-reduced air entraining agents for mortar, gypsum and plaster systems, cement-containing compositions, concrete and the like.

8. The use of alkali metal or ammonium salts of homo- and/or copolymers based on acrylic acid and/or methacrylic acid as a dust-binding additive for air entraining agents for mortar, gypsum and plaster systems, cement-containing compositions, concrete and the tike.